# EUROPÄISCHE PATENTANMELDUNG

(11) **EP 4 245 910 A1**
(43) Veröffentlichungstag der Anmeldung: **20.09.2023**
(21) Anmeldenummer: 23160100.6
(22) Anmeldetag: 06.03.2023
(51) Int. Cl.: D06M 15/507, D06M 17/00, D06M 17/04

(54) **THERMISCH FIXIERBARES FLÄCHENGEBILDE MIT BIOLOGISCH ABBAUBARER HAFTMASSE**

(30) Priorität: 14.03.2022 DE 102022105897
(71) Anmelder: Carl Freudenberg KG, 69469 Weinheim (DE)
(72) Erfinder: KREMSER, Steffen, 68542 Heddesheim (DE); DAVANZO, Mauro, 67063 Ludwigshafen (DE)

(57) **Zusammenfassung**

Die Erfindung betrifft ein thermisch fixierbares textiles Flächengebilde, das insbesondere als fixierbarer Einlage-, Futter- und/oder Oberststoff in der Textilindustrie verwendbar ist, sowie die Verwendung des textilen Flächengebildes in der Textilindustrie, zur Herstellung von Möbeln, Polstern, Heimtextilien, Komponenten zur Fahrzeugausstattung und für den Baubereich, Schuhen, Filtern und weiteren technischen Anwendungen.

## Beschreibung

Die Erfindung betrifft ein thermisch fixierbares textiles Flächengebilde, das insbesondere als fixierbarer Einlage-, Futter- und/oder Oberststoff in der Textilindustrie verwendbar ist. Die Erfindung betrifft weiterhin die Verwendung des textilen Flächengebildes in der Textilindustrie, insbesondere als Einlage-, Futter- und/oder Oberststoff zur Herstellung von Bekleidung, sowie zur Herstellung von Möbeln, Polstern, Heimtextilien, Komponenten zur Fahrzeugausstattung und für den Baubereich, Textilien für Medizin und Hygiene, Schuhen, Filtern und weiteren technischen Anwendungen.

### Hintergrund der Erfindung

Einlagestoffe (auch als Fixierstoffe oder Zwischenstoffe bezeichnet) umfassen im Allgemeinen ein textiles Flächengebilde (eine Trägerlage aus einem textilen Material), wobei wenigstens eine der Oberflächen zumindest teilweise mit einer Haftmasse beschichtet ist. Die Haftmasse ermöglicht es, den Einlagestoff dauerhaft mit einem weiteren Substrat, z.B. einem zu fixierenden Textil- oder Ledermaterial, zu verbinden. Dies verleiht den fixierten Substraten Halt, schützt vor unerwünschtem Formverlust, z.B. durch Dehnung und bewirkt, je nach Material, eine mehr oder weniger starke Versteifung. Dabei finden die Einlagestoffe im Bekleidungssektor breite Anwendung zur Herstellung von Damen- und Herrenbekleidung, Casual Wear, Sport- und Funktionsbekleidung, Arbeits- und Schutzbekleidung, Kinderbekleidung, Unterwäsche, Nachtwäsche, etc. Neben der Herstellung von Bekleidung werden Einlagestoffe auch in weiteren Bereichen, wie z.B. der Herstellung von Möbeln, Polstern, Heimtextilien, Komponenten zur Fahrzeugausstattung und für den Baubereich, Textilien für Medizin und Hygiene, Schuhen, Filtern und weiteren technischen Anwendungen eingesetzt.

Im Bekleidungssektor unterscheidet man je nach Einsatzbereich zwischen Einlagestoffen im engeren Sinne sowie Futter- und Oberststoffen. Einlagestoffe im engeren Sinne befinden sich im Inneren der meisten Kleidungsstücke und sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Typische Einsatzbereiche sind die Kragen, Knopfleisten und Manschetten von Hemden und Blusen, Sakko- und Blazerfrontpartien, der Rock- und Hosenbund und die Schulterpartien. Als Futterstoffe bezeichnet man textile Flächengebilde, die an den Innenseiten von Textilien befestigt werden. Dies erfolgt zunehmend nicht oder nicht ausschließlich durch klassische Fügeverfahren, wie Nähen oder Steppen, sondern durch Fixierung mit einer Haftmassenstruktur. Ein Futter stellt die innere, dem Körper zugewandte, Stoffschicht der Oberbekleidung dar. Futter kann die Funktion haben, die innere Seite eines Kleidungsstückes dauerhafter, bequemer und/oder wärmer zu machen oder auch sie mit einer bestimmten Verzierung zu versehen. So hat Kleidungsfutter in vielen Fällen auch einen modischen Aspekt. Außer in Kleidungsstücken werden Futterstoffe auch in Hüten, Koffern, Handtaschen und anderen Behältern verwendet. Oberstoffe sind Stoffe, die als von außen sichtbare äußere Stoffschicht von Textilien verwendet werden.

Die textilen Flächengebilde bestehen in der Regel aus Vliesstoffen, Geweben, Gestricken, Gewirken oder vergleichbaren Gebilden. Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden. Um die textilen Flächengebilde thermisch fixierbar zu machen, werden sie in der Regel mit einer Haftmasse versehen, wodurch sie durch ein stoffschlüssiges Fügeverfahren, z.B. thermisch und/oder mittels Druck, mit einer weiteren Komponente verbunden werden können. Somit kann eine Einlage z.B. auf einen Oberstoff laminiert werden. Dazu weist die Haftmasse in der Regel wenigstens einen Schmelzklebstoff auf.

Schmelzklebstoffe, auch Heißklebestoffe, Heißkleber oder im Englischen Hotmelts genannt, sind seit langem bekannt. Allgemein versteht man unter ihnen im Wesentlichen lösungsmittelfreie Produkte, die im geschmolzenen Zustand auf eine Klebefläche aufgetragen werden, rasch beim Abkühlen erstarren und damit schnell Festigkeit aufbauen. Die Klebewirkung der Schmelzklebstoffe basiert grundsätzlich darauf, dass sie sich als thermoplastische Polymere reversibel aufschmelzen lassen und als flüssige Schmelze aufgrund ihrer durch den Schmelzvorgang erniedrigten Viskosität in der Lage sind, die zu klebende Fläche zu benetzen und dadurch eine Adhäsion zu ihr auszubilden. Als Folge der anschließenden Abkühlung erstarrt der Schmelzklebstoff wieder zum Festkörper, der eine hohe Kohäsion besitzt und auf diese Weise die Verbindung zur Klebefläche herstellt. Nachdem die Klebung stattgefunden hat, sorgen die viskoelastischen Polymere dafür, dass die Adhäsion auch nach dem Abkühlvorgang mit ihren Volumenänderungen und dem damit verbundenen Aufbau mechanischer Spannungen erhalten bleibt. Die aufgebaute Kohäsion vermittelt die Bindekräfte zwischen den Substraten.

Die WO 2013/162058 beschreibt einen Schmelzklebstoff, enthaltend:
A) ein mit polaren funktionellen Gruppen modifiziertes konjugiertes Dien-basiertes Polymer,
B) ein aliphatisches Polyester-basiertes Harz,
C) ein Klebstoffharz.
Bei der Komponente B) kann es sich unter Anderem auch um ein Polybutylensuccinat handeln. Die beschriebenen Schmelzklebstoffe sollen sich für die Papierverarbeitung, zum Buchbinden und für Einwegprodukte eignen und eine gute Adhäsion auch in feuchtem Zustand aufweisen. Bei den Einwegartikeln handelt es sich um Sanitärprodukte, wie Einwegwindeln, Damenbinden, Haustierlaken, Krankenhauskittel, Operationskittel, Urinbeutel, Schwangerenunterhosen, Stilleinlagen und Achselschweißkissen. Zur Herstellung der Einwegartikel können Fasermaterialien und Polymerfolien miteinander verklebt werden.

Dieses Dokument beschreibt nicht die Verwendung des Schmelzklebstoffs für thermisch fixierbare textile Flächengebilde, die insbesondere als fixierbarer Einlage-, Futter- und/oder Oberststoff in der Textilindustrie und speziell zur Herstellung von Bekleidung verwendet werden. Bei diesen Fixierstoffen und den damit ausgerüsteten Textilien handelt es sich nicht um Einwegprodukte, sondern in der Regel hochwertige Produkte und die Verwendung der Fixierstoffe dient dem Erhalt der Form und schützt vor Verschleiß und Witterungseinflüssen, macht die Produkte somit langlebiger. Bei der Herstellung und Ausrüstung von Textilien mit Einlage- bzw. Fixierstoffen, werden die Stoffe nicht unmittelbar verklebt, sondern es werden die genannten Zwischenprodukte verwendet, auf denen sich eine Haftmassenstruktur noch in einem verklebbaren (nicht verklebten, ungehärteten) Zustand befindet.

Die WO 2013/162058 beschreibt insbesondere auch kein Verfahren, mit dem eine Haftmassenstruktur auf eine Trägerlage aus textilem Material aufgebracht werden kann, so dass diese anschließend durch ein stoffschlüssiges Fügeverfahren, z.B. thermisch und/oder mittels Druck, mit einer weiteren Textilkomponente verbunden werden kann, wie Streuverfahren, Pulverpunkt-Verfahren, Pastendruck-Verfahren, Doppelpunkt-Verfahren, Hotmelt-Verfahren, Ink-Jet-Verfahren, etc.

Die CN 108265394 A beschreibt Meltblown-Vliesstoffe aus Polybutylensuccinatfasern und deren Einsatz als bioverträgliche und abbaubare Materialien, speziell Filtermaterialien, Materialien für den Umweltschutz, etc. Ein Einsatz von Polybutylensuccinat als Komponente einer Haftmassenstruktur für thermisch fixierbare Flächengebilde ist nicht beschrieben.

Die JP 2006 205644 A beschreibt Kunststoffplatten mit einer Bespannung aus Geweben oder Vliesstoffen. Zur Herstellung können die textilen Materialien mit der Kunststoffplatte mit Hilfe eines Polybutylensuccinatharzes laminiert werden.

Die WO 2009/059801 beschreibt ein thermisch fixierbares Flächengebilde, das als fixierbarer Einlagestoff in der Textilindustrie verwendbar ist, mit einer Trägerlage aus einem textilen Material, auf welcher eine zweilagige Haftmassenstruktur, welche ein Bindemittel und ein thermoplastisches Polymer umfasst, aufgebracht ist. Das thermoplastische Polymer fungiert als das eigentliche Haftmittel und ist vorzugsweise ausgewählt unter (Co-)Polyester-, (Co)-Polyamid-, Polyolefin-, Polyurethan-, Ethylenvinylacetat-basierenden Polymeren und Gemischen und Copolymerisaten der genannten Polymere. Das Bindemittel kann ein Bindemittel des Acrylat-, Styrolacrylat-, Ethylen-Vinylacetat-, Butadien-Acrylat-, SBR-, NBR- und/oder Polyurethan-Typs sein.

Die WO 2013/001309 beschreibt ein Flächengebilde, insbesondere zur Verwendung als fixierbarer Einlagestoff in der Textilindustrie, mit einer Trägerlage aus einem textilen Material, auf welcher eine Haftmassenstruktur aufgebracht ist, die eine Polyurethan-Schmelzklebstoffzusammensetzung umfasst, welche ein thermoplastisches Polyurethan enthält.

Die WO 2016/169752 beschreibt ein thermisch fixierbares Flächengebilde mit einer Trägerlage aus einem textilen Material, auf welcher eine Beschichtung aus Polyurethanschaum aufgebracht ist.

Die WO 2019/081696 beschreibt ein thermisch fixierbares Flächengebilde mit einer darauf aufgebrachten Haftmassenstruktur, die ein Polyurethangemisch umfasst, welches mindestens ein Polyesterurethan (B1), mindestens ein Polyetherurethan (B2) sowie mindestens ein Polycarbonaturethan (B3) aufweist und wobei das Polyurethangemisch zumindest teilweise mit einem Vernetzer mit mindestens einer blockierten Isocyanatgruppe vernetzt worden ist.

Die DE 10 2019 106995 beschreibt ein thermisch fixierbares textiles Flächengebilde, insbesondere verwendbar als fixierbarer Einlage-, Futter- und/oder Oberststoff in der Textilindustrie, umfassend ein Trägermaterial auf Basis eines Schmelzblasfaser-Vliesstoffs, wobei das Trägermaterial auf einer Seite Flockfasern und auf der von den Flockfasern abgewandten Seite einen Schmelzklebstoff aufweist.

Die WO 2015/106903 beschreibt ein thermisch fixierbares Flächengebilde mit anisotropen Eigenschaften mit einer Trägerlage aus einem Faserflor oder einem Vliesstoff, auf welche eine thermisch erweichbare Haftmasse und ein Bindemittel aufgebracht ist, wobei die Fasern der Trägerlage zumindest bereichsweise eine anisotrope Orientierung unter Ausbildung einer Vorzugsrichtung aufweisen und das Bindemittel und/oder die Haftmasse derart verteilt ist, dass in der Vorzugsrichtung der Fasern eine größere Menge Bindemittel und/oder Haftmasse vorliegt als quer zur Vorzugsrichtung der Fasern. Die Haftmasse enthält wenigstens einen herkömmlichen Schmelzklebstoff, der unter thermoplastischen Polymeren, wie Polyamiden, Copolyamiden, Polyestern, Copolyestern, Ethylvinylacetat-Polymeren, Polyolefinen (wie Polyethylen, Polypropylen und amorphen Polyalphaolefinen) und Polyurethanen ausgewählt ist.

Die WO 2015/161964 beschreibt ein thermisch fixierbares Flächengebilde mit einer Trägerlage aus einem textilen Material, auf welcher eine zweilagige Haftmassenstruktur aufgebracht ist, die eine unmittelbar auf dem Flächengebilde aufliegende Unterschicht sowie eine auf der Unterschicht angeordnete Oberschicht umfasst. Die Unterschicht enthält einen ersten Schmelzklebstoff, der einen Schmelzpunkt > 140°C und einen Melt-Flow-Index (MFI-Wert) von > 50 g/10 Minuten (190°C /2,16 kg) aufweist, und die Oberschicht enthält einen zweiten Schmelzklebstoff, der einen Schmelzpunkt < 145°C und einen MFI-Wert von < 50 (190°C /2,16 kg) aufweist.

An thermisch fixierbare Flächengebilde, speziell für Einlagestoffe in der Bekleidungsindustrie aber auch für andere technische Textilanwendungen, werden hohe Ansprüche gestellt. Das gewünschte Eigenschaftsprofil ist komplex und umfasst neben den reinen Fixiereigenschaften auch Anforderungen an weitere Materialeigenschaften (wie Weichheit, Sprungelastizität, angenehmer Griff), die Haltbarkeit (z.B. Abriebbeständigkeit im Gebrauch) und die Pflege. So besteht insbesondere ein Bedarf an thermisch fixierbaren Flächengebilden, die eine hohe Beständigkeit gegenüber Waschen und chemischer Reinigung aufweisen.

Aktuell besteht zudem ein großer Bedarf an Einlagestoffen für diverse Anwendungen, die die ökologischen Anforderungen an den Einsatz nachhaltiger Materialien erfüllen. Dazu zählen neben dem Einsatz erneuerbarer Rohstoffe und einem ökologisch vertretbaren Herstellungsprozess insbesondere die biologische Abbaubarkeit/Kompostierbarkeit möglichst aller Komponenten. Solche Einlagestoffen sind ein wichtiges Zwischenprodukt zur Herstellung von Bekleidung, die möglichst ausschließlich aus biologisch abbaubaren/kompostierbaren Komponenten besteht. Bei der Bereitstellung solcher biologisch abbaubarer/kompostierbarer Einlagestoffe soll das übrige Eigenschaftsprofil, speziell die Waschbeständigkeit (Hydrolysestabilität) und chemische Reinigungsbeständigkeit, gegenüber herkömmlichen Produkten nicht verschlechtert werden.

Es wurde nun überraschenderweise gefunden, dass diese Aufgabe durch thermisch fixierbare Flächengebilde gelöst wird, die wenigstens ein Polyalkylensuccinat als Schmelzklebstoff umfassen.

### Zusammenfassung der Erfindung

Ein erster Gegenstand der Erfindung ist ein thermisch fixierbares Flächengebilde, umfassend eine Trägerlage aus einem textilen Material und eine darauf aufgebrachte Haftmassenstruktur, wobei die Haftmassenstruktur wenigstens ein Polyalkylensuccinat als Schmelzklebstoff umfasst.

Bevorzugt umfasst die Haftmassenstruktur
i) wenigstens ein Polyalkylensuccinat,
ii) gegebenenfalls wenigstens einen von den Polyalkylensuccinaten i) verschiedenen Schmelzklebstoff,
iii) gegebenenfalls wenigstens ein von den Schmelzklebstoffen i) und ii) verschiedenes polymeres Bindemittel,
iv) gegebenenfalls wenigstens ein Additiv.

Ein weiterer Gegenstand der Erfindung ist ein Verfahren zur Herstellung eines thermisch fixierbares Flächengebildes, wie zuvor und im Folgenden definert, umfassend Bereitstellen einer Trägerlage aus einem textilen Material und Aufbringen einer Haftmassenstruktur durch ein Auftragverfahren, ausgewählt unter Streuverfahren, Pulverpunkt-Verfahren, Pastendruck-Verfahren, Doppelpunkt-Verfahren, Hotmelt-Verfahren, Ink-Jet-Verfahren und Kombinationen davon.

Ein weiterer Gegenstand der Erfindung ist ein Bekleidungsartikel, umfassend ein thermisch fixierbares Flächengebildes, wie zuvor und im Folgenden definert, in thermisch fixierter Form. Der Bekleidungsartikel ist vorzugsweise ausgewählt unter Herrenbekleidung, Damenbekleidung, Mädchenbekleidung, Knabenbekleidung, Kinderbekleidung, Unterkleidung (Wäsche), Oberbekleidung, Frühlingskleidung, Sommerkleidung, Herbstkleidung, Winterkleidung, Straßenkleidung, Hauskleidung, Schutzkleidung, Arbeitskleidung, Beinbekleidung, Ärmelbekleidung, Rockbekleidung, Rumpfbekleidung, einseitiger, doppelseitiger, gefütterter und futterloser Kleidung, halbfertigen Bekleidungsartikeln und Bekleidungsaccessoires.

Ein weiterer Gegenstand der Erfindung ist die Verwendung eines thermisch fixierbaren Flächengebildes, wie zuvor und im Folgenden definiert, als Einlagestoff, Futterstoff oder Oberstoff zur Herstellung von textilen Produkten, insbesondere in Form von Bekleidung, Polstermöbeln, Teppichen, Bett- und Tischwäsche, Vorhängen, Handtüchern, Putz- und Reinigungstüchern, Filtern, Netzen, sowie zur Herstellung von Fußbekleidung, Textilien für Medizin und Hygiene, Komponenten für die Fahrzeugausstattung und den Baubereich, und davon verschiedenen technischen Textilien.

### Beschreibung der Erfindung

Soweit im Folgenden nichts genaueres angegeben ist, wird der Begriff Einlagestoff breit ausgelegt und umfasst auch Futterstoffe und Oberstoffe.

Das erfindungsgemäße thermisch fixierbare Flächengebilde umfasst eine Trägerlage aus einem textilen Material, die im Rahmen der Erfindung auch als textiles Flächengebilde bezeichnet wird. Diese Trägerlage bzw. das textile Flächengebilde besteht in der Regel aus Vliesstoffen, Geweben, Gestricken, Gewirken oder beliebigen Kombinationen dieser Gebilde.

Ein Kunststoffmaterial gilt als biologisch abbaubar, wenn im Laborversuch wenigstens 60% des organischen Kohlenstoffs in maximal sechs Monaten umgesetzt werden. Nach den Vorgaben der DIN EN 13432:2000-12 zur Kompostierbarkeit müssen die Produkte innerhalb von maximal 90 Tagen in einer industriellen Kompostierungsanlage zu mindestens 90 % zu Bruchstücken von kleiner als 2 mm zersetzbar sein.

Der Schmelzindex (MFI = Melt Flow Index) auch als Schmelze-Massefließrate (MFR = Melt Mass-Flow Rate) bezeichnet, charakterisiert das Fließverhalten thermoplastischer Polymere, wie sie erfindungsgemäß als Schmelzklebstoff eingesetzt werden. Die Bestimmung der Schmelze-Massefließrate kann nach dem in der DIN EN ISO 1133-1:2012-03 beschriebenen Verfahren erfolgen. Der MFR-Wert der als Schmelzklebstoff eingesetzten Polymere hat einen Einfluss auf die Verarbeitbarkeit der Polymere und die Haftungswerte (Trennkraft) der resultierenden thermisch fixierbaren Flächengebilde.

Die Schmelztemperatur der Polyalkylensuccinate und allgemein von teilkristallinen thermoplastischen Polymeren lässt sich mittels DSC (Differential Scanning Calorimetry) bestimmen. Entsprechende Verfahren sind in der DIN EN ISO 11357-1:2017-02 beschrieben.

Die Flächengewichte von textilen Materialen, wie Vliesstoffen, in g/m² können nach ISO 9073-1:1989-07 (deutsche Fassung EN 29073-1:1992) oder ASTM D6242-98 (2004) bestimmt werden.

Ein Maß für die Stärke des Verbunds aus einem Einlagestoff und dem damit fixierten Stoff ist die Trennkraft nach DIN 54310:1980-07. Die Angabe der erforderlichen Kraft für die Trennung des fixierten Einlagestoffs vom Oberstoff erfolgt in N/5 cm. Die erfindungsgemäßen thermisch fixierbaren Flächengebilde zeichnen sich durch eine hohe Trennkraft, gemessen nach DIN 54310:1980-07, von vorzugsweise wenigstens 5 N/5 cm, besonders bevorzugt von wenigstens 10 N/5 cm, aus.

Die erfindungsgemäß eingesetzten thermisch fixierbaren Flächengebilde eignen sich besonders vorteilhaft für die Herstellung von Bekleidung, die zu einem Großteil und insbesondere ausschließlich aus biologisch abbaubaren/kompostierbaren Komponenten besteht. Sie zeichnen sich durch eine hohe Stabilität gegenüber Wäsche und chemischer Reinigung aus. Es wurde überraschend gefunden, dass sich der Verbund aus dem erfindungsgemäße Flächengebilde und einem damit verbundenen Substrat durch eine hohe Trennkraft auszeichnet. Diese bleibt auch bei mehrmaliger Wäsche und chemischer Reinigung erhalten. Darüber hinaus können erfindungsgemäße thermisch fixierbare Flächengebilde mit üblichen Fixierpressen problemlos verarbeitet werden, sie zeigen sehr gute haptische und optische Eigenschaften, sind einfach und kostengünstig herstellbar und tolerieren auch Trocknungsbedingungen bei hohen Zyklenzahlen.

### Haftmassenstruktur

Die Haftmassenstruktur dient dazu, die Trägerlage dauerhaft mit einem anderen Material zu verbinden. Dazu enthält die Haftmassenstruktur wenigstens einen Schmelzklebstoff, wobei es sich in der Regel um thermoplastische Polymere handelt. In einer bevorzugten Ausführung sind die als Schmelzklebstoff eingesetzten Polymere thermisch aktivierbar, d.h. durch Erwärmen wird die Haftkraft in der Regel erheblich gesteigert. Ohne an eine Theorie gebunden zu sein, kann die Steigerung der Haftkraft durch Aktivierung beispielsweise auf einer besseren Benetzbarkeit der zu verbindenden Substrate und/oder einer besseren Verschränkung der Polymerketten untereinander und/oder mit der Substratoberfläche beruhen. Erfindungsgemäß umfasst der Schmelzklebstoff wenigstens ein Polyalkylensuccinat, wie im Folgenden näher definiert.

Zusätzlich zu wenigstens einem Schmelzklebstoff kann die Haftmassenstrunktur wenigstens ein Bindemittel enthalten. Bindemittel im Sinne der Erfindung sind von Schmelzklebern verschiedene Polymere, wobei es sich bevorzugt um physikalisch vernetzende Bindemittel und/oder chemisch vernetzende Bindemittel handeln kann.

Ein bevorzugter Gegenstand der Erfindung ist ein thermisch fixierbares Flächengebilde, umfassend eine Haftmassenstruktur, die
i) wenigstens ein Polyalkylensuccinat,
ii) gegebenenfalls wenigstens einen von den Polyalkylensuccinaten i) verschiedenen Schmelzklebstoff,
iii) gegebenenfalls wenigstens ein von den Schmelzklebstoffen i) und ii) verschiedenes polymeres Bindemittel,
iv) gegebenenfalls wenigstens ein Additiv
umfasst.

In einer speziellen Ausführungsform enthält die Haftmassenstruktur kein mit polaren funktionellen Gruppen modifiziertes konjugiertes Dien-basiertes Polymer. Das heißt, diese werden weder als ein von den Polyalkylensuccinaten i) verschiedener Schmelzklebstoff ii), noch als polymeres Bindemittel iii), noch als Additiv iv) eingesetzt. Dies gilt sowohl für mit polaren funktionellen Gruppen modifizierte konjugierte Dien-basierte Polymere in der nicht hydrierten, wie auch in der hydrierten Form. Die Haftmassenstruktur enthält insbesondere kein mit polaren funktionellen Gruppen modifiziertes konjugiertes Dien-basiertes Polymer, wobei das konjugierte Dien-basierte Polymer ein Block-Copolymer umfasst, speziell ein Styrol-Ethylen/Propylen-Styrol (SEPS) Block Copolymer oder ein Styrol-Ethylen/Butylen-Styrol (SEBS) Block Copolymer, spezieller Aminogruppen-modifiziertes SEBS oder Maleinsäuregruppen-modifiziertes SEBS.

Erfindungsgemäß umfasst die Haftmassenstruktur wenigstens einen Schmelzklebstoff, der ein Polyalkylensuccinat enthält (Komponente i)).

Bevorzugt ist das Polyalkylensuccinat ausgewählt unter den Polykondensations¬produkten der Bernsteinsäure mit wenigstens einem Polyol, ausgewählt unter 1,4-Butandiol, 2,3-Butandiol, 1,3-Propandiol, 1,2-Propandiol, Ethylenglycol und Mischungen davon.

Bevorzugt ist das Polyalkylensuccinat ausgewählt unter Poly-1,4-butylensuccinat (auch als Polybutylensuccinat PBS bezeichnet), Polyethylensuccinat, Poly-1,2-propylensuccinat, Poly-2,3-butylensuccinat, Poly-1,3-propylensuccinat (P1,3PS) und Mischungen davon.

Insbesondere umfasst die Haftmassenstruktur wenigstens ein Polybutylensuccinat.

Polybutylensuccinat ist biologisch abbaubar und kompostierbar und kann durch Reaktion von Bernsteinsäure mit 1,4-Butandiol gewonnen werden. Die Ausgangsstoffe (Bernsteinsäure und 1,4-Butandiol) sind aus Glucose und somit aus nachwachsenden Rohstoffen herstellbar. Polybutylensuccinat ist kommerziell erhältlich, z.B. in Form der BioPBS-Marken der Mitsubishi Chemical Performance Polymers (MCPP).

Die Polyalkylensuccinate und speziell Polybutylensuccinate eignen sich besonders vorteilhaft für den Einsatz als Schmelzklebstoff für thermisch fixierbare Flächengebilde. Sie verfügen über Schmelzindizes und Schmelzpunkte, die insbesondere für den Einsatz als fixierbarer Einlage-, Futter- und/oder Oberststoff in der Textilindustrie geeignet sind.

Bevorzugt enthält die Haftmassenstruktur wenigstens ein Polyalkylen¬succinat, das einen Schmelzindex (MFI-Wert), bestimmt nach DIN EN ISO 1133-1 bei 190°C und 2,16 kg Belastung, von 1 bis 200 g/10 Minuten, bevorzugt von 5 bis 120 g/10 Minuten, insbesondere von 10 bis 80 g/ 10 Minuten, aufweist.

Insbesondere enthält die Haftmassenstruktur wenigstens ein Polybutylen¬succinat, das einen Schmelzindex (MFI-Wert), bestimmt nach DIN EN ISO 1133-1 bei 190°C und 2,16 kg Belastung, von 1 bis 200 g/10 Minuten, bevorzugt von 5 bis 120 g/10 Minuten, insbesondere von 10 bis 80 g/ 10 Minuten, aufweist.

Bevorzugt enthält die Haftmassenstruktur wenigstens ein Polyalkylen¬succinat, das einen Schmelzpunkt im Bereich von 60 bis 190°C, bevorzugt von 90 bis 150°C, insbesondere von 100 bis 130°C, aufweist.

Insbesondere enthält die Haftmassenstruktur wenigstens ein Polybutylen¬succinat, das einen Schmelzpunkt im Bereich von 60 bis 190°C, bevorzugt von 90 bis 150°C, insbesondere von 100 bis 130°C, aufweist.

Die Polyalkylensuccinate und speziell die Polybutylensuccinate eignen sich besonders vorteilhaft für thermisch fixierbare Flächengebilden, die eine hohe Beständigkeit gegenüber Waschen und chemischer Reinigung aufweisen. Sie ergeben gute Trennkraftwerte auch nach mehrmaligen Pflegebehandlungen.

Die Polyalkylensuccinate und speziell die Polybutylensuccinate verfügen herstellungsbedingt über eine bestimmte Partikelgrößenverteilung und eine entsprechende mittlere Partikelgröße. Für den Einsatz als Schmelzklebstoff kann es vorteilhaft sein, die mittlere Partikelgröße und die Partikelgrößenverteilung an den jeweiligen Einsatzbereich anzupassen. So kann es speziell bei den im Folgenden beschriebenen verschiedenen Verfahren zum Auftrag der Haftmassenstruktur auf die Trägerlage von Vorteil sein, wenn der/die Schmelzklebstoff(e) eine an das jeweilige Verfahren angepasste Partikelgröße und Partikelgrößenverteilung aufweisen. Die Polyalkylensuccinate und speziell die Polybutylensuccinate zeichnen sich durch eine gute Vermahlbarkeit aus. Ein speziell geeignetes Verfahren zum Vermahlen von thermoplastischen Polymeren für Schmelzklebstoffe, das sich auch vorteilhaft für Polyalkylensuccinate und speziell Polybutylensuccinate eignet, ist das kryogene Mahlen. Dabei wird das Mahlgut durch Behandlung mit einem Kältemittel, z.B. mit flüssigem Stickstoff, gekühlt. Zur Einstellung der gewünschten Partikelgröße und Partikelgrößenverteilung kann das Mahlgut einer Auftrennung, z.B. mittels bekannter Siebverfahren, unterzogen werden. Zur Einstellung der Produkteigenschaften können auch Blends von zwei oder mehr Schmelzklebstoffen eingesetzt werden. Die einzelnen Komponenten des Blends können sich in der Teilchengröße, einer anderen physiko-chemischen Eigenschaft und/oder in der chemischen Zusammensetzung unterscheiden.

Die in den erfindungsgemäßen thermisch fixierbaren Flächengebilden eingesetzten Haftmassenstrukturen enthalten vorzugsweise Polyalkylensuccinate mit einer mittleren Partikelgröße im Bereich von >0 bis 1000 µm (Mikrometer), besonders bevorzugt von 10 bis 800 µm. Bevorzugt sind Polybutylensuccinate mit einer mittleren Partikelgröße im Bereich von >0 bis 1000 µm, besonders bevorzugt von 10 bis 800 µm.

Für ein Aufbringen der Haftmassenstruktur auf die Trägerlage durch Pastendruck wird vorzugsweise eine wässrige Dispersion eingesetzt, die wenigstens ein Polyalkylensuccinat, speziell wenigstens ein Polybutylensuccinat, mit einer mittleren Partikelgröße von >0 bis 100 µm aufweist. Besonders bevorzugt für den Pastendruck ist eine mittlere Partikelgröße von >0 bis 80 µm.

Für ein Aufbringen der Haftmassenstruktur auf die Trägerlage durch ein Streuverfahren wird vorzugsweise wenigstens ein Polyalkylensuccinat, speziell wenigstens ein Polybutylensuccinat, mit einer mittleren Partikelgröße von 50 bis 300 µm eingesetzt. Besonders bevorzugt für den Streuauftrag ist eine mittlere Partikelgröße von 80 bis 250 µm. Bevorzugt weist die Partikelzusammensetzung für ein Streuverfahren im wesentlichen keinen Staubanteil von Teilchen mit einer Partikelgröße von weniger als 80 µm auf. Bevorzugt beträgt dieser Staubanteil höchstens 2 Gew.-%, besonders bevorzugt höchstens 1 Gew.-%, bezogen auf das Gesamtgewicht der Polymerteilchen.

Für ein Aufbringen der Haftmassenstruktur auf die Trägerlage durch ein Pulverpunkt-verfahren wird vorzugsweise wenigstens ein Polyalkylensuccinat, speziell wenigstens ein Polybutylensuccinat, mit einer mittleren Partikelgröße von >0 bis 500 µm eingesetzt.

Geeignete weitere Schmelzklebstoffe (= Komponente ii)) sind von Polyalkylensuccinaten verschiedene thermoplastische Polymere, vorzugsweise ausgewählt unter Polyestern, Polyolefinen, Polyamiden, Polyurethanen, Polyacrylaten, Styrol-Isopren-Copolymeren, Styrol-Butadien-Copolymeren, Ethylen-Vinylacetat-Copolymeren und Mischungen (Blends) davon.

Geeignete Polyolefine im Sinne der Erfindung sind Homo- und Copolymere, die Alkene einpolymerisiert enthalten. Polyolefine können zusätzlich auch von anderen ethylenisch ungesättigten Kohlenwasserstoffen abgeleitete Wiederholungseinheiten einpolymerisiert enthalten.

Bevorzugt sind Homo- und Copolymere, die wenigstens ein alpha-Olefin einpolymerisiert enthalten. Beispiele für alpha-Olefine sind Ethylen, Prop-1-en, But-1-en, Pent-1-en, Hex-1-en, Oct-1-en oder Dec-1-en.

Beispiele für bevorzugt eingesetzte Polyolefine sind Polyethylene, Polypropylene oder Copolymere von Ethylen und Propylen. Weitere Beispiele sind Copolymere von Ethylen und/oder Propylen mit wenigstens einem weiteren Olefinen oder Diolefin höherer Kohlenstoffzahl, wie But-1-en, Butadien, Isobuten, Pent-1-en, Isopren, Hex-1-en, Hept-1-en, Oct-1-en, Non-1-en, Dec-1-en, Undec-1-en, Dodec-1-en, etc.

Geeignet als Schmelzkleber sind auch modifizierte Polyolefine. Darunter ist ein Copolymer zu verstehen, das wenigstens ein Alken, speziell wenigstens ein alpha-Olefin und wenigstens ein Comonomer, vorzugsweise ausgewählt unter ethylenisch ungesättigten Säuren oder deren Anhydriden, Estern der (Meth)acrylsäure, ethylenisch ungesättigten Epoxidverbindungen und Mischungen davon, einpolymerisert enthalten.

Bevorzugt sind Polyethylen (PE), Polypropylen (PP), amorphe Polyalphaolefine (APAO), etc.

Insbesondere ist der weitere, von Polyalkylensuccinaten verschiedene Schmelzklebstoff ausgewählt unter biologisch abbaubaren und/oder kompostierbaren thermoplastischen Polymeren. Dazu zählen biologisch abbaubare und/oder kompostierbare Polyester und/oder thermoplastische Polyurethane. Insbesondere sind die weiteren, biologisch abbaubaren und/oder kompostierbaren, von Polyalkylensuccinaten verschiedenen Schmelzklebstoff ausgewählt unter Polycaprolacton, Polyhydroxyalkanoaten, Polylactid, aliphatisch-aromatische Copolyestern, thermoplastischen Polyurethanen und Mischungen (Blends) davon.

Polycaprolacton (PCL) ist ein biologisch abbaubarer und kompostierbarer Thermoplast, der durch ringöffnende Polymerisation von ε-Caprolacton hergestellt werden kann.

Geeignete Polyhydroxyalkanoate (PHA) (auch als Polyhydroxyfettsäuren (PHF) bezeichnet) sind Poly(3-hydroxypropionat) (PHP), Poly(3-hydroxybutyrat) (Polyhydroxybuttersäure, PHB), Poly(3-hydroxyvalerat) (PHV), Poly(3-hydroxyhexanoat) (PHHx), Poly(3-hydroxybutyrat-co-3-hydroxyvaleriat) (PHBV), etc.

Bevorzugt als Polyhydroxyalkanoat ist Poly(3-hydroxybutyrat).

Polyhydroxyessigsäure, auch Polyglycolsäure (PGA) genannt, kann durch anionische Polymerisation von Glycolid, dem Dimer der Hydroxyessigsäure, hergestellt werden.

Die höheren Polyhydroxyalkanoate sind sowohl biologisch abbaubar und/oder kompostierbar, als auch aus regenerativen (nicht fossilen) Quellen verfügbar. Poly(3-hydroxybutyrat) (PHB) wird von verschiedenen Bakterien durch Fermentation von Kohlenhydraten bei kontrollierter Nährstoffzufuhr gebildet.

Polylactid (Polymilchsäure, PLA) kann durch direkte Synthese, d.h. Polykondensation von Milchsäure, hergestellt werden. Die Herstellung der als Edukt eingesetzten Milchsäure kann biotechnologisch durch Fermentation von Kohlenhydraten erfolgen. So kann ausgehend von Stärke durch enzymatische Hydrolyse Glucose und aus dieser mit Hilfe von Lactobacillus-Kulturen Milchsäure hergestellt werden. Alternativ kann Polymilchsäure durch Ringöffnungspolymerisation von Lactid hergestellt werden.

Im Rahmen der Erfindung bezeichnet der Begriff aliphatisch-aromatischer-Copolyester (AAC) einen Polyester, der wenigstens eine aromatische Dicarbonsäure, wenigstens ein aliphatisches Diol und wenigstens eine weitere aliphatische Komponente eingebaut enthält. Die weitere aliphatische Komponente ist vorzugsweise ausgewählt unter aliphatischen Dicarbonsäuren, Hydroxycarbonsäuren, Lactonen und Mischungen davon. AAC) in der Regel biologisch abbaubar und/oder kompostierbar.

Bevorzugt sind die aliphatisch-aromatischen Copolyester (AAC) ausgewählt unter Copolyestern von 1,4-Butandiol, Adipinsäure und Terephthalsäure (PBAT), Copolyestern von 1,4-Butandiol, Terephthalsäure und Bernsteinsäure sowie Copolyestern von 1,4-Butandiol, Terephthalsäure, Isophthalsäure, Bernsteinsäure und Milchsäure (PBSTIL). Bevorzugt ist Polybutylenadipat-terephthalat (PBAT). PBAT ist kommerziell unter dem Markennamen Ecoflex ^{®} von BASF SE erhältlich.

Thermoplastische Polyurethane auf Basis nachwachsender Rohstoffe sind kommerziell von der Covestro AG unter der Bezeichnung Desmopan EC erhältlich.

Für die Partikelgrößenverteilung und die mittlere Partikelgröße der weiteren Schmelzklebstoffe gelten die Ausführungen zu den Polyalkylensuccinate und speziell den Polybutylensuccinaten analog. Die in den erfindungsgemäßen thermisch fixierbaren Flächengebilden eingesetzten Haftmassenstrukturen enthalten vorzugsweise Schmelzklebstoffe, die insgesamt (bezogen auf alle in der Haftmassenstruktur enthaltenen Schmelzklebstoffpartikel) eine mittlere Partikelgröße im Bereich von >0 bis 1000 µm (Mikrometer), besonders bevorzugt von 10 bis 800 µm, aufweisen. Für den Pastendruck wird vorzugsweise eine wässrige Dispersion eingesetzt, die Schmelzklebstoffe mit einer mittleren Partikelgröße von >0 bis 100 µm, besonders bevorzugt von >0 bis 80 µm, aufweist. Für ein Aufbringen der Haftmassenstruktur auf die Trägerlage durch ein Streuverfahren werden vorzugsweise Schmelzklebstoffe mit einer mittleren Partikelgröße von 50 bis 300 µm, besonders bevorzugt von 80 bis 250 µm, eingesetzt. Bevorzugt weist die Partikelzusammensetzung der Schmelzklebstoffe für ein Streuverfahren im wesentlichen keinen Staubanteil von Teilchen mit einer Partikelgröße von weniger als 80 µm auf. Für ein Aufbringen der Haftmassenstruktur auf die Trägerlage durch ein Pulverpunktverfahren weisen die Schmelzklebstoffe ingesamt vorzugsweise eine mittleren Partikelgröße von >0 bis 500 µm auf.

Bindemittel im Sinne der Erfindung (= Komponente iii)) sind von Schmelzklebern verschiedene Polymere, wobei es sich um physikalisch vernetzende Bindemittel und/oder chemisch vernetzende Bindemittel handeln kann. Geeignete Bindemittel sind ausgewählt unter Acrylat-Homo- und Copolymeren, Styrol-Acrylat-Copolymeren, Butadien-Acrylat-Copolymeren, Ethylen-Vinylacetat-Copolymeren, Styrol-Butadien-Copolymeren (SBR), Acrylnitril-Butadien-Copolymeren, Polyurethanen, Polyurethanacrylaten und Mischungen (Blends) davon. Bevorzugte Copolymere von Polystyrol sind Styrol-Butadien-Copolymere.

Die Haftmassenstruktur kann wenigstens ein Additiv (= Komponente iv)) enthalten, vorzugsweise ausgewählt unter Weichmachern, Antioxitantien, UV-Stabilisatoren, Vernetzern, Füll- und Verstärkungsstoffen, Farbstoffen, Verlaufshilfsmitteln, Emulgatoren, Verdickern, Tackifiern (klebrigmachenden Harzen), Flammschutzmitteln, leitfähigkeitsverbessernden Komponenten, gekapselten Stoffen (wie Duftstoffen, Farbstoffen, etc.), geruchsabsorbierenden Stoffen (wie Cyclodextrinen, PVP, etc.), mikrobioziden Stoffen, Aktivkohle, superabsorbierenden Materialien, Ionenaustauschern und Mischungen davon. Jedes einzelne Additiv kann vorzugsweise in einer Menge von 0,1 bis 70 Gew.%, noch bevorzugter von 5 bis 60 Gew.% jeweils bezogen auf das Gesamtgewicht der Haftmassenstruktur, eingesetzt werden.

Vorzugsweise ist die Haftmassenstruktur frei von zugesetztem Wasser und anderen Lösungsmitteln.

### Trägerlage

Das erfindungsgemäße thermisch fixierbare Flächengebilde umfasst eine Trägerlage aus einem textilen Material, d.h. ein textiles Flächengebilde. Die Auswahl des für die Trägerlage einzusetzenden textilen Materials erfolgt im Hinblick auf den jeweiligen Anwendungszweck bzw. die besonderen Qualitätsanforderungen. Geeignet sind zum Beispiel Gewebe, Gewirke, Gestricke, Vliesstoffe oder dergleichen sowie Kombinationen aus zwei oder mehr der zuvorgenannten textilen Materialien. Durch die Erfindung sind hier prinzipiell keinerlei Grenzen gesetzt. Der Fachmann kann hier leicht die für die jeweilige Anwendung geeignete Materialkombination auffinden.

Die Trägerlage kann Fasern, d.h. Fäden endlicher Länge (sogenannte Stapelfasern mit Längen bis in den Dezimeterbereich), Filamente, d.h. Fäden praktisch unendlicher Länge, und Kombinationen davon enthalten. Die Fasern und Filamente der Trägerlage können ungekräuselt, kräuselbar oder gekräuselt sein. Die Trägerlage kann ein- oder mehrlagig aufgebaut sein.

Die zur Herstellung der Trägerlage eingesetzten Fasern lassen sich charakterisieren über ihre Feinheit, d. h. das Gewicht bezogen auf eine bestimmte Länge. Die Angabe der sogenannten Feinheit der Fasern erfolgt in dtex (1 dtex = 0,1 tex oder 1 Gramm pro 10000 Meter). Die erfindungsgemäß zum Einsatz kommenden textilen Flächengebilde können prinzipiell aus beliebigen Fasertypen der verschiedensten Titerbereiche bestehen. Bevorzugt umfasst das Trägermaterial Fasern mit einer Feinheit im Bereich von 0,5 bis 10 dtex oder besteht aus Fasern mit einer Feinheit im Bereich von 0,5 bis 10 dtex. Besonders bevorzugt umfasst das Trägermaterial Fasern mit einer Feinheit im Bereich von 0,8 bis 6,7 dtex oder besteht aus Fasern mit einer Feinheit im Bereich von 0,8 bis 6,7 dtex.

Bevorzugt beträgt das Flächengewicht der Trägerlage 6 bis 500 g/m², besonders bevorzugt 20 bis 350 g/m², insbesondere 30 bis 200 g/m².

In einer bevorzugten Ausführung umfasst die Trägerlage wenigstens einen Vliesstoff oder besteht die Trägerlage aus wenigstens einem Vliesstoff.

Besonders bevorzugt kommen zur Herstellung der Faserflore für die Vliesstoffe Stapelfasern zum Einsatz. Die Faserflore können mit unterschiedlichen Vliesbildungstechniken erzeugt werden. Dazu zählen z.B. trocken gelegte Faserflore, nach dem Spinnvliesstoff-Verfahren erhaltene Faserflore oder nach dem Melt-Blown-Verfahren erhaltene Faserflore. Zur Herstellung der Vliesstoffe können die zu einem Faserflor abgelegten Einzelfasern einer Verfestigung unterzogen werden. Verfahren zur Vliesverfestigung sind dem Fachmann bekannt und umfassen mechanische, chemische oder thermische Verfestigungsverfahren.

Bei mechanisch gebundenen Vliesstoffen wird das Faserflor durch mechanisches Verschlingen der Fasern verfestigt. Hierzu verwendet man vorzugsweise eine Nadeltechnik oder ein Verschlingen mittels Wasser- bzw. Dampfstrahlen. Die Vernadelung ergibt weiche Produkte. Das Flächengewicht der durch mechanische Vernadelung erhaltenen Trägerlagen ist im Allgemeinen größer als 50 g/m². Dies kann für verschiedene Einlagestoffanwendungen zu schwer sein. Durch Verfestigung mit Wasserstrahlen lassen sich Vliesstoffe mit niedrigeren Flächengewichten herstellen.

Bei chemisch gebundenen Vliesstoffen wird das Faserflor mit einem Bindemittel adhäsiv verfestigt. Die Bindemittel können z.B. in fester Form, als fließfähige Zusammensetzung oder in Form von Bindefasern eingesetzt werden. Die Verbindung erfolgt z.B. punktförmig oder flächig mittels einer koagulierten oder verfilmten Bindeflüssigkeit, einer Schmelze von Pulvern oder mittels erweichten oder geschmolzenen Bindefasern. Geeignete Bindemittel sind dem Fachmann bekannt und umfassen z.B. chemisch vernetzende Kunststoffe, wie z.B. ein Gemisch aus Ethyl- und Butylacrylat mit den üblichen Vernetzergruppen, die insbesondere in der Form von Dispersionen eingesetzt werden. Es können aber auch thermoplastische Polymere enthaltende Zusammensetzungen, z.B. als Pulver oder in Kombination mit einem feinverteilten Füllmaterial eingesetzt werden. Diese führen eine Verfestigung der Fasern in den behandelten Bereichen des Faserflors herbei. Beispiele für diesen Typ von thermoplastischem Polymerbinder sind Polyolefinpulver, insbesondere Polyethylen- oder Polypropylenpulver, bevorzugt Co-Polyester-Pulver mit Schmelzbereich > 150°C. Weitere Beispiele für Binder sind in der US-A-5,366,801, der WO-A-02/12,607, der WO-A-02/59,414 und der WO-A-02/95,314 zu finden. Es ist weiterhin bekannt, Bikomponenten-Fasern bzw. -Filamente als Bindefasern zur Vliesstoffherstellung einzusetzen. Sie können als Kern-Mantel-Fasern bzw. -Filamente mit niedriger schmelzenden Mantelkomponente als Bindefaser bei der thermischen Verfestigung von Vliesstoffen - flächig oder punktförmig - genutzt werden. Das Faserflor kann z.B. durch Imprägnieren, Besprühen, Aufstreuen/Einstreuen thermoplastischer Pulver, Abmischen mit Bindefasern oder mittels sonst üblicher Auftragsmethoden mit einem Bindemittel versehen und anschließend verfestigt werden. Dazu kann das behandelte Faserflor nach dem Auftrag des Bindermaterials z.B. einer Behandlung durch Erhitzen, ggf. unter Druck, unterzogen werden. Dieses kann auf an sich bekannte Art und Weise erfolgen.

Thermisch gebundene Vliesstoffe werden zur Verwendung als Einlagestoffe üblicherweise Kalander- oder Heißluft-verfestigt. Bei Einlagevliesstoffen hat sich heutzutage die punktförmige Kalanderverfestigung als Standardtechnologie durchgesetzt. Das Faserflor besteht dabei in der Regel aus speziell für diesen Prozess entwickelten Fasern aus Polyester oder Polyamid und wird mittels eines Kalanders bei Temperaturen um den Schmelzpunkt der Faser verfestigt, wobei eine Walze des Kalanders mit einer Punktgravur versehen ist.

Die oben beschriebenen unterschiedlichen Verfahren zur Herstellung von textilen Flächengebilden sind bekannt und in Fachbüchern und in der Patentliteratur beschrieben.

In einer speziellen Ausführung weist das textile Flächengebilde ein Trägermaterial auf, dass einer Hydrophobierung mit wenigstens einem üblichen Hydrophbierungsmittel unterzogen wurde. Hydrophobierungsmittel sind dem Fachmann bekannt und umfassen speziell Fluorcarbone, Silicone, Paraffine und Kombinationen davon.

In einer speziellen Ausführung weist das textile Flächengebilde ein Trägermaterial auf Basis eines Schmelzblasfaser-Vliesstoffs auf. Das Schmelzblasverfahren ist bekannt und in verschiedenen Patenten und Publikationen beschrieben.

Textile Flächengebilde, die ein Trägermaterial auf Basis eines Schmelzblasfaser-Vliesstoffs aufweisen und deren Herstellung sind in der DE 10 2019 106995 beschrieben, worauf hier in vollem Umfang Bezug genommen wird.

Der zur Herstellung der textilen Flächengebilde eingesetzten Fasern und Filamente können aus Chemiefasern, Naturfasern oder Kombinationen davon bestehen.

Bevorzugt sind die Fasern und Filamente des textilen Materials der Trägerlage ausgewählt unter Polyesterfasern, Polyacrylnitrilfasern (Acrylfasern), aliphatischen oder semiaromatischen Polyamidfasern, Polyaramidfasern, Polyamid-Imid-Fasern, Polyolefinfasern, Polyesteramidfasern, Kohlenstofffasern, Polyvinylalkoholfasern, man-made Cellulosefasern, Fasern aus Baumwolle, Leinen (Flachs), Jute, Sisal, Kokos, Hanf, Bambus, Wolle, Seide, Tierhaarfasern von Alpaka, Lama, Kamel, Angora, Mohair, Kaschmir, Rosshaar, Fasern aus Chitin, Chitosan, Pflanzenproteinen, Keratin und Mischungen davon.

Bevorzugt enthält das textile Material der Trägerlage biologisch abbaubare und/oder kompostierbare Fasern und/oder Filamente. Bevorzugt sind die im textilen Material der Trägerlage enthaltenen Fasern und Filamente zu wenigstens 50 Gew.-%, besonders bevorzugt zu wenigstens 75 Gew.-%, insbesondere zu wenigstens 90 Gew.-%, gezogen auf das Gesamtgewicht der Fasern und Filamente, biologisch abbaubar und/oder kompostierbar.

Chemiefasern sind vorzugsweise ausgewählt unter Polyester-, Polyamid-, Polyolefin-, Polyacrylnitril-, Polyurethanfasern und Gemischen hiervon.

Naturfasern sind vorzugsweise ausgewählt unter Baumwolle, Leinen (Flachs), Hanf, Wolle, Seide und Mischungen davon.

Bevorzugte Kunstfasern aus natürlichen Polymeren sind man-made Cellulosefasern. Der Begriff "man-made Cellulose-Fasern" (industriell gefertigten Cellulose-Fasern) umfasst nicht-derivatisierte Cellulose-Fasern und derivatisierte Cellulose-Fasern. Zur Herstellung von nicht-derivatisierten Cellulose-Fasern wird feste Cellulose, die in Form von Zellstoff vorliegt, zunächst in einem geeigneten Lösungsmittel gelöst und dann einer Faserbildung unter erneuter Verfestigung unterzogen. Die so erhaltenen nicht-derivatisierten Cellulose-Fasern werden auch als Cellulose-Regeneratfasern bezeichnet. Bevorzugt zur Herstellung von Cellulose-Regeneratfasern ist das Lyocellverfahren, bei dem N-Methylmorpholin-N-oxid als Lösungsmittel eingesetzt wird. Lyocell-Fasern werden in einem breiten Spektrum von Feinheiten von der Firma Lenzing AG unter dem Markennamen Tencel^{®} angeboten. Alternativ kann die Cellulose durch Derivatisierung, z.B. durch Veresterung mit einer organischen oder anorganischen Säure, derivatisiert und somit in eine besser lösliche Form gebracht und anschließend zu Fasern (Celluloseester-Fasern) verarbeitet werden. Bevorzugt werden zur Faserbildung Celluloseacetate eingesetzt.

Bevorzugt umfasst das textile Material der Trägerlage Fasern und Filamente aliphatischer Polyester. Diese sind insbesondere ausgewählt unter Polymilchsäure (PLA), Poly(ethylen-succinat) (PES), Poly(butylen-succinat) (PBS), Poly(ethylen-adipat) (PEA), Poly(butylensuccinat-co-butylenadipat) (PBSA), Polyhydroxyessigsäure (PGA), Poly(butylen-succinat-co-butylen-sebacat) (PBsu-co-BSe), Poly(butylen-succinat-co-butylen-adipat) (PBSu-co-Bad), Poly(tetramethylen-succinat) (PTMS), Polycaprolacton (PCL), Polypropriolacton (PPL), Poly(3-hydroxybutyrat) (PHB), Poly(3-hydroxybutyratco-3-hydroxyvaleriat) (PHBV), und Mischungen davon.

Eine spezielle Ausführungsform der aliphatischen Polyester sind die Polyhydroxyalkanoate, wie Poly(3-hydroxybutyrat), Poly(4-hydroxybutyrat) (PHB) und Poly(3-hydroxybutyrat-co-3-hydroxyvaleriat) (PHBV). Diese sind vorteilhafter Weise nicht nur biologisch abbaubar und/oder kompostierbar, sondern auch aus regenerativen (nicht fossilen) Quellen verfügbar. Poly(3-hydroxybutyrat) (PHB) wird von verschiedenen Bakterien durch Fermentation von Kohlenhydraten bei kontrollierter Nährstoffzufuhr gebildet. Poly(3-hydroxybutyrat-co-3-hydroxyvaleriat) (PHBV) lässt sich ebenfalls fermentativ aus Glucose und Propionsäure herstellen.

Bevorzugt umfasst das textile Material der Trägerlage Fasern und Filamente aliphatisch-aromatischer-Copolyester (AAC). Diese sind in der Regel biologisch abbaubar und/oder kompostierbar. Bevorzugt sind die aliphatisch-aromatischen Copolyester (AAC) ausgewählt unter Copolyestern von 1,4-Butandiol, Terephthalsäure und Adipinsäure (BTA), Copolyestern von 1,4-Butandiol, Terephthalsäure und Bernsteinsäure, Copolyestern von 1,4-Butandiol, Terephthalsäure, Isophthalsäure, Bernsteinsäure und Milchsäure (PBSTIL). Geeignet sind auch Mischungen (Blends) von aliphatisch-aromatischen Polyestern, wie Polyethylenterephthalat (PET), Polybutylenterephthalat (PBT), Polyethylenisophthalat (PEIP), Glycol-modifiziertes Polyethylenterephthalat (PETG) mit wenigstens einem der zuvor genannten aliphatischen Polyester. PETG wird durch Veresterung von Terephthalsäure mit Ethylenglykol und 1,4-Cyclohexandimethanol (CHDM) erhalten.

In einer speziellen Ausführungsform umfasst das textile Material der Trägerlage wenigstens eine Mehrkomponentenfaser (Multikomponentenfaser). Geeignete Mehrkomponentenfasern umfassen wenigstens zwei Polymerkomponenten. Bevorzugt sind Mehrkomponentenfasern aus zwei Polymerkomponenten (Bikomponentenfasern). Geeignete Typen von Bikomponentenfasern sind Mantel/Kern-Fasern (sheath/core), Seite-an-Seite- Fasern (side-by-side), Matrix/Fibrillen-Fasern (islands-in-the-sea) und Tortenstück-Fasern. Eine bevorzugte Bikomponentenfaser enthält zwei Polymerkomponenten, ausgewählt unter zwei unterschiedlichen Polyestern.

### Auftragverfahren

Ein weiterer Gegenstan der Erfindung ist ein Verfahren zur Herstellung eines thermisch fixierbares Flächengebildes, wie zuvor und im Folgenden definert, umfassend das Bereitstellen einer Trägerlage aus einem textilen Material und das Aufbringen einer Haftmassenstruktur durch ein Auftragverfahren. Bezüglich geeigneter und bevorzugter Ausführungsformen der Trägerlage wird auf die zuvor genannten geeigneten und bevorzugten Ausführungsformen in vollem Umfang Bezug genommen.

Die Haftmassenstruktur kann nach üblichen Verfahren auf die Trägerlage aus textilem Material aufgebracht werden. Dabei ist es möglich, dass die Haftmassenstruktur als Zusammensetzung (Mischung) aller Komponenten auf die Trägerlage aufgebracht wird oder das einzelne Komponenten der Haftmassenstruktur separat aufgebracht werden. Die Haftmassenstruktur kann auf die gesamte Oberfläche der Trägerlage (vollflächig) oder auf einen oder mehrere Teilbereiche aufgebracht werden. Der Auftrag auf Teilbereich kann in Form bestimmter Muster, z.B. punkt- oder streifenförmig, erfolgen. Der Auftrag der Haftmassenstruktur auf die Trägerlage kann in einem oder mehreren Auftragschritten erfolgen. Bei verschiedenen Auftragschritten können gleiche oder unterschiedliche Auftragverfahren zum Einsatz kommen. Verfahren zum Auftragen der Haftmassenstruktur oder einzelner Komponenten davon sind prinzipiell bekannt. Dazu zählen speziell Streuverfahren, Pulverpunkt-Verfahren, Pastendruck-Verfahren, Doppelpunkt-Verfahren, Hotmelt-Verfahren, Ink-Jet-Verfahren und Kombinationen davon.

Bevorzugt beträgt die Menge an aufgebrachter Haftmassenstruktur pro Fläche der Trägerlage 1 bis 80 g/m², besonders bevorzugt 5 bis 40 g/m².

In einer ersten bevorzugten Ausführung wird die Haftmassenstruktur in Pulverform auf die Trägerlage aus dem textilen Material aufgetragen.

Schmelzklebstoffe in Pulverform können mittels Streuauftrag aufgebracht werden, was insbesondere zum Kleben poröser Substrate für die Herstellung insgesamt atmungsaktiver Textilverbunde zweckmäßig ist. Vorteilhaft am Streuauftrag ist, dass es eine einfache Auftragsmethode für Anwendungen in großem Maßstab ist.

Da Pulver thermoaktiverbarer Schmelzklebstoffe bereits bei niedrigen Temperaturen klebfähig sind, eignen sie sich zur schonenden Laminierung wärmeempfindlicher Substrate, z.B. hochwertiger Textilien. Dank guter Fließeigenschaften im aktivierten Zustand wird selbst bei niedrigem Druck und kurzer Anpresszeit eine gute Verbindung hergestellt; dennoch bleibt das Risiko des Durchschlagens in das Gewebe gering.

Die Größe der Partikel orientiert sich an der zu bedruckenden Fläche, beispielsweise der gewünschten Größe eines Bindungspunktes. Im Falle eines Punktmusters kann der Partikeldurchmesser zwischen >0 µm und 500 µm variieren. Grundsätzlich ist die Partikelgröße des Schmelzklebstoffs nicht einheitlich, sondern folgt einer Verteilung, d.h. man hat immer ein Partikelgrößenspektrum vorliegen. Zweckmäßigerweise ist die Partikelgröße abgestimmt auf die gewünschte Auftragsmenge, Punktgröße und Punktverteilung.

In einer weiteren bevorzugten Ausführung wird die Haftmassenstruktur mit einem Doppelpunkt-Verfahren auf die Trägerlage aus dem textilen Material aufgetragen. Das Doppelpunkt-Verfahren ist besonders leistungsfähig hinsichtlich der Verklebung des thermisch fixierbaren Flächengebildes z.B. mit einem Oberstoff, der Pflegebehandlung und in Bezug auf die Rückvernietung. Die Doppelpunkte weisen einen zweischichtigen Aufbau auf, d.h. sie bestehen aus einem Unter- und einem Oberpunkt. Der Unterpunkt dringt in das Trägermaterial ein und dient als Sperrschicht gegen Haftmassenrückschlag und zur Verankerung der Oberpunktpartikel. Übliche Unterpunkte bestehen beispielsweise aus wenigstens einem Bindemittel und/oder aus wenigstens einem Schmelzklebstoff. Wenn der Unterpunkt wenigstens einen Schmelzklebstoff enthält, ist dieser ausgewählt unter Polyalkylensuccinaten, den zuvor genannten weiteren geeigneten thermoplastischen Polymeren und Mischungen davon. Enthält der Unterpunkt wenigstens einen Schmelzklebstoff, so trägt dieser bei der Fixierung zur Klebkraft mit bei. Je nach Zusammensetzung trägt der Unterpunkt neben der Verankerung im Basismaterial auch als Sperrschicht zur Verhinderung des Haftmassenrückschlages bei.

Der Doppelpunkt wird vorzugsweise in einem Muster im wesentlichen runder Punkte auf die Trägerlage aufgebracht, wobei das Punktmuster regulär oder irregulär verteilt sein. Der Doppelpunkt ist dabei nicht auf ein Muster aus runden Punkten beschränkt sondern kann in beliebigen Geometrien aufgebracht werden, z.B. auch in Form von Linien, Streifen, netz- oder gitterartigen Strukturen, Punkten mit rechteckiger, rautenförmiger oder ovaler Geometrie oder dergleichen.

Die Hauptklebekomponente im zweischichtigen Aubau ist im Allgemeinen primär der Oberpunkt. Vorzugsweise weist somit der Oberpunkt wenigstens einen Schmelzklebstoff auf. Der Schmelzklebstoff des Oberpunkts ist vorzugsweise ausgewählt unter Polyalkylensuccinaten, den zuvor genannten weiteren geeigneten thermoplastischen Polymeren und Mischungen davon. Vorzugsweise weist der Oberpunkt wenigstens ein Polyalkylensuccinat als Schmelzklebstoff auf. Besonders bevorzugt weist der Oberpunkt wenigstens ein Polybutylensuccinat als Schmelzklebstoff auf.

In einer speziellen Ausführung wird das Material des Oberpunkts als Pulver auf den Unterpunkt aufgestreut. Nach dem Streuvorgang wird der überschüssige Teil des Pulvers (zwischen den Punkten der unteren Schicht) zweckmäßigerweise wieder abgesaugt. Nach anschließender thermischer Behandlung ist der Oberpunkt auf dem Unterpunkt gebunden und kann als Klebstoff zum Oberpunkt dienen.

Die Anzahl an Punkten, die auf die Trägerlage aufgebrachte Menge an Haftmassenstruktur und die Geometrie des Punktmusters kann je nach Einsatzzweck des Einlagestoffes variieren. In einer geeigneten Ausführung wird die Zusammensetzung für die Unterpunkte mit einem Druckverfahren auf die Trägerlage aufgebracht, z.B. mittels einer Rotationssiebdrucktechnik. Die Bedruckung kann mit üblichen Druckschablonen erfolgen, z.B. mit einer Druckschablone CP 110, was einer offenen Fläche von 20% entspricht, oder mit einer Druckschablone CP 52, was einer offenen Fläche von 15 % entspricht.

In einer weiteren bevorzugten Ausführung wird die Haftmassenstruktur mit einem Pastendruck-Verfahren auf die Trägerlage aus dem textilen Material aufgetragen. Bei dieser Technologie wird eine Druckpaste eingesetzt und mittels eines Druckverfahrens, speziell mittels eines Rotationssiebdruckverfahrens, auf die Trägerlage aufgetragen. Zu Herstellung der Druckpaste wird vorzugsweise eine wässrige Dispersion der als Schmelzkleber eingesetzten thermoplastischen Polymere vewendet. Die Schmelzklebstoffe weisen bevorzugt eine mittlere Partikelgröße < 80 µm auf. Rezepturen für Druckpasten umfassen in der Regel weitere Komponenten, wie Verdicker, Laufhilfsmittel, etc. Nach dem Auftrag der Haftmassenstruktur auf die Trägerlage wird die bedruckte Trägerlage zweckmäßigerweise einem Trocknungsprozess unterzogen.

Die erfindungsgemäßen thermisch fixierbaren Flächengebilde lassen sich als Einlagestoff, Futterstoff oder Oberstoff einsetzen. Die Erfindung betrifft auch die Verwendung zu diesen Zwecken, insbesondere zur Herstellung von textilen Produkten in Form von Bekleidung, Schuhen, Polstermöbeln, Teppichen, Bett- und Tischwäsche, Vorhängen, Handtüchern, Putz- und Reinigungstüchern, Filtern, Netzen, etc.

Die erfindungsgemäßen thermisch fixierbaren Flächengebilde eignen sich weiterhin zur Herstellung von Fußbekleidung, Komponenten für die Fahrzeugausstattung und den Baubereich, und davon verschiedenen technischen Textilien.

Die erfindungsgemäßen thermisch fixierbaren Flächengebilde eignen sich speziell zur Herstellung von biologisch abbaubaren und/oder kompostierbaren textilen Produkten.

### Bekleidungsartikel und Verwendung des thermisch fixierbaren Flächengebildes

Ein weiterer Gegenstand der Erfindung ist ein Bekleidungsartikel, umfassend ein thermisch fixierbares Flächengebildes, wie zuvor definert, in thermisch fixierter Form. Bezüglich der thermisch fixierbaren Flächengebilde und deren thermische Fixierung, z.B. mit üblichen Fixierpressen, wird auf die entsprechenden Passagen dieses Dokuments in vollem Umfang Bezug genommen.

Der Bekleidungsartikel ist speziell ausgewählt unter Herrenbekleidung, Damenbekleidung, Mädchenbekleidung, Knabenbekleidung, Kinderbekleidung, Unterkleidung (Wäsche), Oberbekleidung, Frühlingskleidung, Sommerkleidung, Herbstkleidung, Winterkleidung, Straßenkleidung, Hauskleidung, Schutzkleidung, Arbeitskleidung, Beinbekleidung, Ärmelbekleidung, Rockbekleidung, Rumpfbekleidung, einseitiger, doppelseitiger, gefütterter und futterloser Kleidung. Im Rahmen der Erfindung umfasst der Begriff Bekleidungsartikel auch halbfertige Artikel und Bekleidungsaccessoires.

Gegenstand der Erfindung ist auch die Verwendung eines thermisch fixierbaren Flächengebildes, wie hierin definiert, als Einlagestoff zur Herstellung von Oberbekleidung, bevorzugt Hemden, Blusen und Polo-Shirts. Sie dienen speziell als Einlagen für Kragen, Manschetten oder Knopfleisten. In der Herrenbekleidung können sie für Plackartikel, Ärmelfische, Schulterpolster und zur Fixierung von Sakko-Vorderteilen zum Einsatz kommen, in der Damenbekleidung zur Fixierung von Blazerteilen. Die erfindungsgemäßen thermisch fixierbaren Flächengebilde eignen sich weiter für Casual wear, Sport- und Funktionsbekleidung, z.B. für Einlagen, die sich leicht mit dem Oberstoff fixieren lassen und sicher verbunden bleiben, selbst nach strapaziösen Waschverfahren. Arbeitsbekleidung und Schutzbekleidung für den alltäglichen Einsatz muss (hoch)funktional und beständig sein, da sie häufig extremen Reinigungsverfahren ausgesetzt wird oder hohen Wasch- und Veredlungstemperaturen standhalten und gegenüber Abnutzung resistent sein muss. Zudem muss sie häufige Maßänderungen aushalten und die Passform soll dauerhaft erhalten bleiben. Dies gilt gleichermaßen für Schutzbekleidung, die vor Feuer, Hitze oder extremer Kälte schützen. Zur Herstellung von Kinderbekleidung sind Vliesstoff-Einlagen ideal für Kragen, Manschetten, Bundeinlagen und Leisten.

Spezielle Ausführungen zur Verwendung der erfindungsgemäßen thermisch fixierbaren Flächengebilde sind:
- In Anzügen, Mänteln und Blazern für
   Vorderseiten-Stücke,
   Ober- und Unterkragen,
   Manschettenknöpfe,
   Klappen, Laschen, Falze, Schlitze, Bänder, Passen,
   Bruststücke,
   Filzteile,
   Schulterstücke
   Taschen, Stegteile,
   Schnallen,
   Bänder,
- In Mänteln für
   komplette Bekleidungsfront,
   Bruststücke,
   Manschetten, Klappen, Laschen, Gürtel, Schlitze, Passen, untere Saumbänder,
   Epauletten, Ober- und Unterkragen,
   Ärmelköpfe,
   Pelzkragen als spezielles Stützgewebe
   Wärmeisolierung
   Trapunto-Füllungen,
- In Wollkleidung, Sportkleidung, Oberbekleidung für
   komplette Bekleidungsfront,
   Bruststücke,
   Revers,
   Ober- und Unterkragen
   Epauletten, Gürtel,
   Klappen, Laschen, Schlitze, Passen, Saumbänder,
   spezielle Füllungen,
- In Kleidern für
   offene und geschlossene Fronten,
   Kragen,
   Manschetten,
   Taschen, Klappen, Laschen, Schlitze, Passen,
   Epauletten und Gürtel,
   Halsverkleidungen,
   Taillenbänder,
   Kantenbänder,
- In Hemden für
   Kragen, Ober- und Unterkragen,
   Verkleidungen,
   Knopfleisten,
   Manschetten,
   Nackenbänder,
- In Hosen für
   Tailenbänder,
   Schlitzverkleidungen,
   Verlängerungslaschen,
   Taschenklappen,
   Taschenaufnäher,
   Gürtelschlaufenfüller,
- In Blusen für
   Kragen, Ober- und Unterkragen,
   Verkleidungen,
   Knopfleisten,
   Manschetten,
   Plissee Stabilisatoren.

Die erfindungsgemäß modifizierten textilen Flächengebilde können mit einem zu verstärkenden textilen Oberstoff in an sich bekannter Weise verklebt werden.

Erfindungsgemäß können die verschiedensten Oberstoffe eingesetzt werden, beispielsweise PES-, Baumwolle- oder Batist-Oberstoffe.

Der Einsatz eines erfindungsgemäßen thermisch fixierbaren Flächengebildes ist jedoch nicht auf diese Anwendung beschränkt. Auch andere Anwendungen sind denkbar, beispielsweise als fixierbare textile Flächengebilde bei Heimtextilien wie Polstermöbeln, verstärkten Sitzkonstruktionen, Sitzbezügen oder als fixierbares und dehnfähiges textiles Flächengebilde in der Automobilausstattung, bei Schuhkomponenten oder im Bereich Hygiene/Medikal.

Die Erfindung wird anhand der folgenden, die allgemeine Offenbarung nicht einschränkenden Beispiele näher beschrieben.

### Beispiele

Für die erfindundsgemäßen Haftmassenstrukturen und die darauf basierenden thermisch fixierbaren Flächengebilde wurde ein Polybutylensuccinat (PBS) mit einem Schmelzindex (MFI-Wert), bestimmt nach DIN EN ISO 1133-1 bei 190°C und 2,16 kg Belastung, von 22 g/10 Minuten und einem Schmelzpunkt von 115°C als Schmelzklebstoff eingesetzt. Das Polybutylensuccinat ist kompostierbar im Sinne der DIN EN 13432:2000-12.

Für die Vergleichsbeispiele wurde ein Polycaprolacton (PCL) mit einem Schmelzindex (MFI-Wert), bestimmt nach DIN EN ISO 1133-1 bei 160°C und 2,16 kg Belastung, von 19 g/10 Minuten und einem Schmelzpunkt von 55 - 65°C als Schmelzklebstoff eingesetzt. Das Polycaprolacton ist ebenfalls kompostierbar im Sinne der DIN EN 13432:2000-12.

### Beispiel 1:

Ein Gewebe aus 100% Baumwolle mit einem Flächengewicht von 125 g/m² wurde nach dem Pulverpunktverfahren beschichtet. Im Beschichtungsprozeß wurden jeweils Pulver von Polybutylensuccinat und Polycaprolactam mit einer Partikelgröße im Bereich von 0 - 180 µm (Mikrometer) mit einer CP 152 Gravurwalze (Puderpunktkalander) in einer Auftragsmenge von 28 g/m² auf die Gewebebasis aufgetragen.

Die Fixierung der Einlage zu einem Oberstoff (50% Baumwolle und 50% Polyester in Form eines Hemdenpopeline-Gewebes) wurde anschließend durch Behandlung in einer Hemdenpresse bei einer Temperatur von 130°C Vorheizung und 150°C Hauptheizung sowie einem Druck von 1 bar für 12 Sekunden vorgenommen.

Anschließend wurde der Verbund einmal mit einem Vollwaschmittel bei 40°C gewaschen und jeweils bei Raumtemperatur 24 Stunden getrocknet.

In Tabelle 1 sind die Trennkraftwerte ohne und mit Waschbehandlung und/oder Lagerung bei erhöhter Tempertatur und Feuchte im Klimaschrank wiedergegeben. Es ist jeweils der Mittelwert aus 3 Einzelmessungen angegeben.

**Tabelle 1**

| | **Schmelzklebstoff / Trennkraft [N/5 cm]** | |
|---|---|---|
| **Behandlung** | PCL (Vergleich) | PBS (erf.gemäß) |
| unbehandelt | 22,5 | 19,2 |
| 1 × 40°-Wäsche | 18,1 | 11,0 |
| nach 2 Wochen Lagerung bei 60°C und 80% Feuchte | 0,0^{a)} | 19,4 |
| nach 1 × 40°-Wäsche und 2 Wochen Lagerung bei 60°C und 80% Feuchte | 0,0 | 17,4 |
| nach 4 Wochen Lagerung bei 60°C und 80% Feuchte | 0,0 | 17,3 |
| nach 1 × 40°-Wäsche und 4 Wochen Lagerung bei 60°C und 80% Feuchte | 0,0 | 15,9 |

| | | |
|---|---|---|
| a) ein Wert von 0,0 in der Tabelle bedeutet "keine Haftung" | | |

Es konnte gezeigt werden, dass mit dem erfindungsgemäßen Haftmassesystem auf Basis von mit Polybutylensuccinat beschichteten Einlagevliesstoffen Verbundbeschichtungen erhalten werden, die sich durch eine hohe Waschbeständigkeit und Lagerbeständigkeit bei erhöhter Temperatur und Feuchte auszeichnen. Verbundbeschichtungen auf Basis von Polycaprolacton als Schmelzklebstoff zeigen zwar ohne jede Behandlung auch sehr gute Haftwerte. Sie verfügen jedoch speziell über keine ausreichende Lagerbeständigkeit bei erhöhter Temperatur und Feuchte.

In Tabelle 2 sind die Trennkraftwerte ohne und mit Behandlung durch chemische Reinigung und/oder Lagerung bei erhöhter Tempertatur und Feuchte im Klimaschrank wiedergegeben. Es wurde ein hydrophobierter Oberstoff aus 65% Polyester und 35% Baumwolle eingesetzt. Es ist jeweils der Mittelwert aus 3 Einzelmessungen angegeben.

**Tabelle 2**

| | **Schmelzklebstoff / Trennkraft [N/5 cm]** | |
|---|---|---|
| **Behandlung** | PCL (Vergleich) | PBS (erf.gemäß) |
| unbehandelt | 26,8 | 13,8 |
| 1 × Chemische Reinigung | 0,0 | 14,5 |
| nach 2 Wochen Lagerung bei 60°C und 80% Feuchte | 0,0 | 23,0 |
| nach 1 × Chemischer Reinigung und 2 Wochen Lagerung bei 60°C und 80% Feuchte | 0,0 | 20,7 |
| nach 4 Wochen Lagerung bei 60°C und 80% Feuchte | 0,0 | 29,3 |
| nach 1 × Chemischer Reinigung und 4 Wochen Lagerung bei 60°C und 80% Feuchte | 0,0 | 17,2 |

| | | |
|---|---|---|
| ein Wert von 0,0 in der Tabelle bedeutet "keine Haftung" | | |

Es konnte gezeigt werden, dass mit dem erfindungsgemäßen Haftmassesystem auf Basis von mit Polybutylensuccinat beschichteten Einlagevliesstoffen Verbundbeschichtungen erhalten werden, die sich durch eine hohe Beständigkeit gegenüber chemischer Reinigung auszeichnen. Hier liegt ein entscheidender Vorteil gegenüber Verbundbeschichtungen auf Basis von Polycaprolacton als Schmelzklebstoff.

### Beispiel 2:

Eine Vliesstoffbasis aus 100% Polyester mit einem Flächengewicht von 34 g/m² wurde nach dem Pastendruckverfahren beschichtet. Dazu wurde der Vliesstoff in einer Rotationssiebdruckmaschine mit mit einer Haftmassen-Dispersion mit einem Punktmuster aus 110 Punkten/cm² mit einer Trockenauftragsmenge von 18g/m² bedruckt. Der bedruckte Vliesstoff wird einer thermischen Behandlung in einem Labortrockner bei 160°C für 30 Sekunden unterzogen.

Die Haftmassen-Dispersion war wie folgt zusammengesetzt:
30 Gew.-TI. Schmelzklebstoff mit einer Partikelfraktion von 0-80 µm
10 Gew.-TI. Verdicker, Netzmittel, weitere Additive
60 Gew.-TI. Wasser
Viskosität: 32 000 cP, pH-Wert: 6,6

Die Fixierung der Einlage zu einem hydrophobierten Oberstoff (65% Polyester und 35% Baumwolle) erfolgte durch Behandlung in einer Durchlaufpresse bei einer Temperatur von 120 bzw. 140°C und einem Druck von 2,5 bar bar für 12 Sekunden.

In Tabelle 3 sind die Trennkraftwerte ohne und mit Wasch-Behandlung wiedergegeben. Es ist jeweils der Mittelwert aus 3 Einzelmessungen angegeben.

**Tabelle 3**

| | **Schmelzklebstoff / Trennkraft [N/5 cm]** |
|---|---|
| **Behandlung** | PBS (erfindungsgemäß) |
| Fixiertemperatur 120°C unbehandelt | 10,3 |
| Fixiertemperatur 140°C unbehandelt | 12,3 |
| Fixiertemperatur 120°C | 10,4 |
| 1 × 60°-Wäsche | |

## Patentansprüche

1. Thermisch fixierbares Flächengebilde, umfassend eine Trägerlage aus einem textilen Material und eine darauf aufgebrachte Haftmassenstruktur, wobei die Haftmassenstruktur wenigstens ein Polyalkylensuccinat als Schmelzklebstoff umfasst.

2. Thermisch fixierbares Flächengebilde nach Anspruch 1, wobei das Polyalkylensuccinat ausgewählt ist unter den Polykondensationsprodukten der Bernsteinsäure mit wenigstens einem Polyol, ausgewählt unter 1,4-Butandiol, 2,3-Butandiol, 1,3-Propandiol, 1,2-Propandiol, Ethylenglycol und Mischungen davon.

3. Thermisch fixierbares Flächengebilde nach einem der vorhergehenden Ansprüche, wobei die Haftmassenstruktur wenigstens ein Polybutylensuccinat umfasst.

4. Thermisch fixierbares Flächengebilde nach einem der vorhergehenden Ansprüche, wobei die Haftmassenstruktur keine mit polaren funktionellen Gruppen modifizierte konjugierte Dien-basierte Polymere enthält.

5. Thermisch fixierbares Flächengebilde nach einem der vorhergehenden Ansprüche, wobei die Haftmassenstruktur wenigstens einen Polyalkylensuccinat-Schmelzklebstoff enthält, der einen Schmelzindex (MFI-Wert), bestimmt nach DIN EN ISO 1133-1 bei 190°C und 2,16 kg Belastung, von 1 bis 200 g/10 Minuten, bevorzugt von 5 bis 120 g/10 Minuten, insbesondere von 10 bis 80 g/ 10 Minuten, aufweist.

6. Thermisch fixierbares Flächengebilde nach einem der vorhergehenden Ansprüche, wobei die Haftmassenstruktur wenigstens ein Polyalkylensuccinat enthält, das einen Schmelzpunkt im Bereich von 60 bis 190°C, bevorzugt von 90 bis 150°C, insbesondere von 100 bis 130°C, aufweist.

7. Thermisch fixierbares Flächengebilde nach einem der vorhergehenden Ansprüche, wobei die Haftmasse wenigstens einen weiteren, von Polyalkylensuccinaten verschiedenen Schmelzklebstoff enthält, vorzugsweise ausgewählt unter Polyestern, Polyolefinen, Polyamiden, Polyurethanen, Polyacrylaten, Styrol-Isopren-Copolymeren, Styrol-Butadien-Copolymeren, Ethylen-Vinylacetat-Copolymeren und Mischungen davon.

8. Thermisch fixierbares Flächengebilde nach einem der vorhergehenden Ansprüche, wobei die Haftmasse wenigstens einen weiteren, von Polyalkylensuccinaten verschiedenen Schmelzklebstoff enthält, ausgewählt unter biologisch abbaubaren und/oder kompostierbaren thermoplastischen Polymeren, insbesondere ausgewählt unter Polycaprolacton, Polyhydroxyalkanoaten, Polylactid, aliphatisch-aromatischen Copolyestern, thermoplastischen Polyurethanen und Mischungen davon.

9. Thermisch fixierbares Flächengebilde nach einem der vorhergehenden Ansprüche, wobei die Haftmassenstruktur als zweilagige Haftmassenstruktur, umfassend eine unmittelbar auf dem Flächengebilde aufliegende Unterschicht sowie eine auf der Unterschicht angeordnete Oberschicht ausgebildet ist, wobei die Unterschicht und/oder die Oberschicht wenigstens ein Polyalkylensuccinat als Schmelzklebstoff umfasst.

10. Thermisch fixierbares Flächengebilde nach einem der vorhergehenden Ansprüche, wobei die Trägerlage Fasern enthält, die biologisch abbaubar und/oder kompostierbar sind, bevorzugt die Trägerlage zu mindestens 50 Gew.-%, bezogen auf das Gesamtgewicht der eingesetzten Fasern, aus Fasern besteht, die biologisch abbaubar und/oder kompostierbar sind.

11. Verfahren zur Herstellung eines thermisch fixierbares Flächengebildes, wie in einem Ansprüche 1 bis 10 definert, umfassend Bereitstellen einer Trägerlage aus einem textilen Material und Aufbringen einer Haftmassenstruktur durch ein Auftragverfahren, ausgewählt unter Streuverfahren, Pulverpunkt-Verfahren, Pastendruck-Verfahren, Doppelpunkt-Verfahren, Hotmelt-Verfahren, Ink-Jet-Verfahren und Kombinationen davon.

12. Bekleidungsartikel, umfassend ein thermisch fixierbares Flächengebildes, wie in einem Ansprüche 1 bis 10 definert, in thermisch fixierter Form, wobei der Bekleidungsartikel vorzugsweise ausgewählt ist unter Herrenbekleidung, Damenbekleidung, Mädchenbekleidung, Knabenbekleidung, Kinderbekleidung, Unterkleidung (Wäsche), Oberbekleidung, Frühlingskleidung, Sommerkleidung, Herbstkleidung, Winterkleidung, Straßenkleidung, Hauskleidung, Schutzkleidung, Arbeitskleidung, Beinbekleidung, Ärmelbekleidung, Rockbekleidung, Rumpfbekleidung, einseitige, doppelseitige, gefütterte und futterlose Kleidung, halbfertigen Bekleidungsartikeln und Bekleidungsaccessoires.

13. Verwendung eines thermisch fixierbaren Flächengebildes, wie in einem der Ansprüche 1 bis 10 definiert, als Einlagestoff, Futterstoff oder Oberstoff zur Herstellung von textilen Produkten, insbesondere in Form von Bekleidung, Schuhen, Polstermöbeln, Teppichen, Bett- und Tischwäsche, Vorhängen, Handtüchern, Putz- und Reinigungstüchern, Filtern, Netzen, sowie zur Herstellung von Fußbekleidung, Komponenten für die Fahrzeugausstattung und den Baubereich, und davon verschiedenen technischen Textilien.

14. Verwendung eines thermisch fixierbaren Flächengebildes, wie in einem der Ansprüche 1 bis 10 definiert, zur Herstellung von biologisch abbaubaren und/oder kompostierbaren textilen Produkten.

15. Verwendung eines thermisch fixierbaren Flächengebildes, wie in einem der Ansprüche 1 bis 10 definiert,
- als Einlagestoff zur Herstellung von Oberbekleidung, bevorzugt Hemden und Blusen, insbesondere zur Fixierung der Vorderkanten, Büste, Kragen, Manschetten, Knopfleisten, Stulpen, Patten und/oder Plisses,
- in Herrenbekleidung und Damenbekleidung zur Verstärkung von Hosenbunden (in Form von Bundeinlagen), Nähten, Taschenpaspeln und Säumen,
- in Herrenbekleidung und Damenbekleidung in Vorderteilen in Form von Einlagen und Bändern für die Stabilisierung von kleinen Komponenten und Revers, in Plack-Einlagen für gefütterte oder ungefütterte Mäntel,
- in Damenbekleidung als Bundeinlagen für Röcke und Hosen,
- in Bekleidungsaccessories, vorzugsweise als Bänder für Hüte und Hutverstärkungen,
- zum Handarbeiten und Nähen,
- als Wattierung mit Adhesives.
